# NEUE EUROPÄISCHE PATENTSCHRIFT

(11) **EP 0 283 005 B2**
(45) Veröffentlichungstag und Bekanntmachung des Hinweises auf die Entscheidung über den Einspruch: **22.12.1993**
(45) Hinweis auf die Patenterteilung: 27.12.1991
(21) Anmeldenummer: 88104224.6
(22) Anmeldetag: 17.03.1988
(51) Int. Cl.: B60S 1/08

(54) **Verfahren und Intervallschalter mit einer Schaltungsanordnung zur Steuerung des Wischintervalls von Scheibenwischern in Fahrzeugen**
Method and interval switch with switching arrangement for controlling wiper delay of windscreen wipers in vehicles
Méthode et interrupteur d'intervalle avec agencement de circuit pour commander le retard de balayage des essuie-glaces de véhicules

(30) Priorität: 17.03.1987 DE 3708547
(43) Veröffentlichungstag der Anmeldung: 21.09.1988
(73) Patentinhaber: DODUCO GMBH + Co Dr. Eugen Dürrwächter, 75172 Pforzheim (DE)
(72) Erfinder: Uhl, Günter, Dr. Dipl.-Ing., D-7267 Unterreichenbach (DE)
(74) Vertreter: Twelmeier, Ulrich, Dipl.Phys.

(56) Entgegenhaltungen:
- EP-A- 0 135 438
- EP-A- 0 136 008
- DE-A- 2 649 413
- DE-C- 3 529 004
- US-A- 4 375 610
- ELEKTOR, Nr. 60, April 1980, Seiten 18-23, Canterbury, GB; "Intelligent Wiper Delay"
- ELEKTOR, Nr. 60, April 1980, Seiten 18-23, Canterbury, GB; "Intelligent Wiper Delay"
- BMW-Betriebsanleitung der 7er Reihe XI/1986

## Beschreibung

Die Erfindung geht aus von einem Verfahren mit den im Oberbegriff des Anspruchs 1 angegebenen Merkmalen.

Bei heute in Fahrzeugen installierten Intervallschaltern zur Steuerung des Wischintervalls von Scheibenwischern ist die Pausenzeit zwischen zwei aufeinanderfolgenden Wischbewegungen fast immer fest vorgegeben. Daher kommt es im praktischen Betrieb häufig vor, dass diese Pausenzeit zu lang oder zu kurz ist, je nach Stärke des augenblicklichen Niederschlages. Um dem abzuhelfen, ist in der DE-35 29 004 C1 bereits ein Verfahren zur Beeinflussung des Wischintervalls von Scheibenwischern offenbart worden. Das bekannte Verfahren setzt voraus, dass das Kraftfahrzeug einen Betätigungsschalter für die Scheibenwischer hat, der aufeinanderfolgend die Schaltstellungen "AUS", "Intervallbetrieb EIN" und "Dauerbetrieb EIN" hat. Diese Voraussetzung ist bei vielen Kraftfahrzeugen nicht erfüllt, so dass schon deshalb der Anwendung des bekannten Verfahrens in Bausätzen zur Nachrüstung von bereits ausgelieferten Kraftfahrzeugen Grenzen gesetzt sind.

Ausgehend von der Schaltstellung "Intervallbetrieb EIN" wird bei dem in der DE-35 29 004 C1 beschriebenen Verfahren das Wischintervall verkürzt durch Übergang in die Schalterstellung "Dauerbetrieb EIN" und Rückkehr in die Stellung "Intervallbetrieb EIN", wohingegen das Wischintervall verlängert wird durch Übergang in die Stellung "AUS" und Rückkehr in die Stellung "Intervallbetrieb EIN". Dieses Verfahren hat verschiedene Nachteile. Zum einen ist es für den Fahrer umständlich, dass er zum Verlängern und zum Verkürzen des Wischintervalls unterschiedliche Operationen durchführen muss. Ausserdem ist es nachteilig, dass zum Verkürzen des Wischintervalls die Schalterstellung "Dauerbetrieb EIN" benötigt wird, denn die zugehörige elektrische Leitung vom Schalter zum Wischermotor führt direkt, d.h. unter Umgehung des Intervallrelais, zum Motor des Scheibenwischers. Deshalb kann man zur Verwirklichung des in der DE-35 29 004 C1 beschriebenen Verfahrens nicht einfach das Intervallrelais durch ein modifiziertes, eine nach dem bekannten Verfahren arbeitende Intervallsteuerschaltung enthaltendes Bauteil ersetzen. Das wäre aber Voraussetzung für eine praxisgerechte Möglichkeit zur Nachrüstung bereits ausgelieferter Kraftfahrzeuge.

In der DE-31 08 263 A1 ist ein programmierbares Gerät zur Veränderung des Wischintervalls beschrieben, welches der Fahrer zum Verlängern des Wischintervalls zwischen zwei Wischbewegungen für die Zeitspanne, um die er das Wischintervall verlängern will, ausschalten muss. Zum Verkürzen des Wischintervalls muss der Fahrer das Gerät während einer Wischbewegung ausschalten und dann nach der gewünschten neuen Intervallzeit wieder einschalten. Nachteilig bei diesem bekannten Gerät ist es, dass der Fahrer zum Verlängern des Wischintervalls eine andere Operation durchführen muss als zum Verkürzen des Wischintervalls. Insbesondere zum Verkürzen des Wischintervalls wird seine Aufmerksamkeit in besonderer Weise gefordert und dadurch vom Verkehrsgeschehen abgelenkt, weil er das Gerät während der kurzen Dauer einer Wischbewegung ausschalten muss. Ausserdem können mit dem bekannten Gerät zur Veränderung des Wischintervalls bereits ausgelieferte Kraftfahrzeuge nur schwer nachgerüstet werden, denn es hat zwei Relais und einen gesonderten Schalter zum Betätigen des Geräts zusätzlich zu dem im Kraftfahrzeug ohnehin schon vorhandenen Betätigungsschalter des Scheibenwischers. Deshalb genügt es nicht, anstelle des im Kraftfahrzeug schon vorhandenen Wischintervallrelais ein anderes Relais in Kombination mit der das Wischintervall ändernden Schaltung einzusetzen, vielmehr muss auch Platz zur Unterbringung eines zweiten Relais und eines weiteren Betätigungsschalters vorhanden sein bzw. geschaffen werden.

Aus der DE-30 08 946 A1 ist ein programmierbares Scheibenwischer-Intervallschaltgerät bekannt, das nach Betätigen seines Betätigungsschalters zunächst einmal einen Wischvorgang auslöst und zum Auslösen eines zweiten Wischvorganges ein weiteres Mal betätigt werden muss. Danach ist das zwischen den beiden ersten Wischvorgängen liegende Intervall gespeichert und die folgenden Wischvorgänge werden in entsprechenden zeitlichen Abständen ausgelöst, wobei die Intervalle noch in Abhängigkeit von der Fahrgeschwindigkeit oder der von einem Feuchtesensor mitgeteilten Feuchtigkeit automatisch verändert werden können. Das Einprogrammieren eines geänderten Zeitintervalls setzt voraus, dass zwischenzeitlich ein Abschaltvorgang erfolgt ist, wonach in der beschriebenen Weise neu programmiert werden kann. Ausserdem ist es erforderlich, jedesmal, wenn der Intervallbetrieb des Wischers eingeschaltet wird, das Wischintervall neu einzustellen. Eine solche Vorgehensweise ist verhältnismässig umständlich.

Ein Verfahren mit den Merkmalen des Oberbegriffs des Anspruchs 1 und ein Intervallschalter mit den Merkmalen des Oberbegriffs des Anspruchs 8 sind aus dem Dokument ELEKTOR Nr. 60, April 1980, Seiten 18 bis 23, bekannt. Der daraus bekannte Intervallschalter hat einen Tastschalter, durch dessen Betätigung Wischvorgänge ausgelöst werden können. Der zeitliche Abstand zwischen zwei Betätigungen des Tastschalters wird als Pausenzeit der Intervallschaltung gespeichert.

Nachteilig dabei ist, dass zur Betätigung der Intervallschaltung der Tastschalter zusätzlich zu dem serienmässig ohnehin vorhandenen Wählschalter des Scheibenwischers vorgesehen ist und zusammen mit dem Schaltgerät am Armaturenbrett angebracht werden muss. Das ist nachteilig, weil die Scheibenwischerbedienung mittels zwei Schaltern vom Fahrer zuviel Aufmerksamkeit erfordert und weil eine Nachrüstung von Fahrzeugen mit der Intervallschaltung aufwendige Anschlußarbeiten erfordert.

Der Erfindung liegt die Aufgabe zugrunde, ein Verfahren und einen Intervallschalter mit einer Schaltungsanordnung zur Steuerung des Wischintervalls von Scheibenwischern in Fahrzeugen anzugeben, welches sich durch einen höheren Bedienungskomfort auszeichnet, wobei eine besondere Eigung zur Nachrüstung angestrebt wird.

Die Aufgabe wird gelöst durch ein Verfahren mit den im Anspruch 1 angegebenen Merkmalen. Der Durchführung des Verfahrens dient der im Anspruch 8 angegebene Intervallschalter. Vorteilhafte Weiterbildungen der Erfindung sind Gegenstand der jeweiligen Unteransprüche.

Bei dem erfindungsgemäßen Verfahren wird mit einer ersten, durch Betätigen des Wählschalters gestarteten Wischbewegung ein Zeitmeßvorgang gestartet und mit der nächstfolgenden, vom Fahrer willkürlich ausgelösten Wischbewegung wieder beendet. Die dadurch gemessene Pausenzeit, welche vorzugsweise vom Beginn der ersten Wischbewegung bis zum Beginn der zweiten Wischbewegung gemessen wird, aber auch vom Ende der ersten Wischbewegung bis zum Ende der zweiten Wischbewegung gemessen werden könnte, wird als Pausenzeit für die nachfolgenden Wischbewegungen vorgegeben, und zwar solange, bis eine erneute Änderung der Pausenzeit in der beschriebenen Weise durchgeführt wird.

Die auf diese Weise angepaßte Pausenzeit ist optimal, weil der Fahrer die Pausenzeitmessung in genau jenem Augenblick beendet, in welchem er eine erneute Wischbewegung für zweckmässig hält. Eine erneute Einstellung der Pausenzeit wird erst dann erforderlich, wenn sich die Stärke des Niederschlags wesentlich ändert oder das Fahrzeug in der Zwischenzeit ausser Betrieb gesetzt wurde und durch Stromloswerden der Steuerschaltung die gespeicherte Pausenzeit verloren ging.

Gestartet wird der Zeitmeßvorgang jeweils durch Überführen des Wählschalters in die Schaltstellung "Wischerbetrieb AUS". Das ermöglicht es dem Fahrer, jederzeit willkürlich unter Auslösen einer Wischbewegung in den Betrieb des Intervallschalters einzugreifen und mit der Programmierung einer geänderten Pausenzeit zu beginnen.

Wird während der Fahrt der Intervallbetrieb für eine längere Zeitspanne, die ein vorgegebenes Zeitlimit - vorzugsweise ca. 45 s - überschreitet, ausgeschaltet, bleibt die zuletzt gespeicherte Pausenzeit zweckmässigerweise erhalten. Das hat den Vorteil, dass zum Beispiel dann, wenn während einer Fahrt im Tunnel der Intervallbetrieb vorübergehend beendet wird, die zuvor einprogrammierte und gespeicherte Pausenzeit nicht verloren geht, sondern am Tunnelausgang der Intervallbetrieb mit der noch gespeicherten Pausenzeit wieder aufgenommen werden kann.

Der zuletzt gespeicherte Wert der Pausenzeit bleibt vorzugsweise auch dann erhalten, wenn der Wischer auf Dauerbetrieb geschaltet wird. Das hat den Vorteil, dass man z.B. bei Überholvorgängen auf nasser Straße, bei denen verstärkt Wasser auf die Windschutzscheibe auftrifft, kurzzeitig auf Dauerwischbetrieb umschalten kann und nach dem Zurückschalten auf den Intervallbetrieb dieser automatisch mit der zuletzt einprogrammierten Pausenzeit abläuft.

Beim Inbetriebsetzen des Fahrzeugs beginnt man das Verfahren am besten mit einer fest vorgegebenen Pausenzeit, welche in einem Festwertspeicher enthalten sein kann. Für diese fest vorgegebene Pausenzeit wählt man vorzugsweise einen mittleren, in der Praxis häufig vorkommenden Wert, vorzugsweise etwa 5 s, zweckmässigerweise nicht mehr als 15 s. Dadurch wird erreicht, dass der Fahrer nicht jedesmal, wenn er den Scheibenwischer im Intervallbetrieb betreiben will, die Pausenzeit neu einstellen muss; vielmehr wird in vielen Fällen überhaupt keine Pausenzeiteinstellung nötig sein.

Das erfindungsgemäße Verfahren ist einfach in der Anwendung. Es verlangt vom Fahrer keine besondere Aufmerksamkeit und führt sofort zum gewünschten Ergebnis. Da die Einstellung der neuen Pausenzeit sowohl beim Verlängern als auch beim Verkürzen in gleicher Weise durch willkürliches Auslösen von zwei Wischbewegungen, nämlich durch Ausschalten und Wiedereinschalten des Intervallschalters erfolgt, am besten mittels des üblicherweise an der Lenksäule angebrachten Wählschalters, kann der Fahrer ohne besondere Ablenkung vom Verkehrsgeschehen bequem einen optimalen Wischzyklus einstellen.

Zweckmässigerweise wird Vorsorge dafür getroffen, dass Pausenzeiten, die kürzer sind als ein einzelner Wischvorgang, nicht gespeichert werden.

Bei Überholvorgängen oder bei Gegenverkehr auf nasser Strasse kommt es vor, dass durch überholte bzw. entgegenkommende Fahrzeuge kurzzeitig eine größere Menge Wasser oder Schneematsch auf die Windschutzscheibe geschleudert wird. Um in einem solchen Fall die Windschutzscheibe rasch wieder klar zu bekommen, ist vorzugsweise vorgesehen, dass durch Betätigen eines Schalters, der eine Schaltstellung "vorzeitiger Wischvorgang EIN" hat, die laufende Pausenzeit ohne Änderung der gespeicherten Pausenzeit verkürzt wird, so dass ein vorzeitiger Wischvorgang abläuft, mit welchem die gespeicherte Pausenzeit erneut zu laufen beginnt. Bei dem Schalter handelt es sich zweckmässigerweise um den ohnehin vorgesehenen Wählschalter, der zu diesem Zweck die Schaltstellung "vorzeitiger Wischvorgang EIN" als zusätzliche Schaltstellung aufweist. Auf diese Weise ist es möglich, durch einfache Schalterbetätigung einen einzelnen Wischvorgang zu starten, ohne dass die gespeicherte Pausenzeit verändert wird; d.h., dass mit diesem willkürlich ausgelösten Wischvorgang die alte, gespeicherte Pausenzeit erneut zu laufen beginnt und erst nach Ablauf der gespeicherten Pausenzeit ein weiterer Wischvorgang erfolgt, sofern nicht zuvor ein weiterer Wischvorgang willkürlich ausgelöst wird.

Die Fahrzeuge sind heute in der Regel mit einer Scheibenwaschanlage ausgerüstet, welche durch Betätigung eines Schalters, insbesondere durch Heranziehen eines an der Lenksäule angebrachten Betätigungshebels gegen das Lenkrad, Wasser auf die Windschutzscheibe gespritzt und -meist mit einer gewissen Verzögerung - der Scheibenwischer in Gang gesetzt wird. Beendet man die Betätigung des Schalters, indem man den Betätigungshebel wieder losläßt, wird das Aufspritzen des Wassers sogleich beendet, der Wischer läuft jedoch noch nach, er macht noch drei bis fünf Wischbewegungen. Bei Vorhandensein einer solchen Scheibenwaschanlage sieht man bei dem erfindungsgemäßen Verfahren zweckmässigerweise vor, dass die Wisch-Wasch-Funktion in gleicher Weise ausgelöst werden kann, wie es vorstehend beim vorzeitigen Wischvorgang beschrieben wurde. Mit dem Ende des letzten Wischvorganges der Wisch-Wasch-Funktion beginnt dann die gespeicherte Pausenzeit erneut zu laufen.

Die zur Ausführung des erfindungsgemäßen Verfahrens nötige Steuerschaltung kann sehr preiswert und kompakt in integrierter Bauweise gebildet werden; eine Nachrüstung ist leicht dadurch möglich, dass man ein konventionelles Intervallschaltrelais gegen ein Schaltrelais mit erfindungsgemäßer Schaltungsanordnung austauscht; in dessen Gehäuse, welches ebenso klein oder sogar noch kleiner sein kann als das Gehäuse eines konventionellen Intervallschaltrelais, kann auch die integrierte Steuerschaltung mit untergebracht werden. Am Wählschalter, welcher am besten einen Betätigungshebel aufweist und an der Lenksäule des Fahrzeugs angebracht ist, und in dem elektrischen Leitungsnetz im Fahrzeug sind ein Austausch oder Umbau nicht erforderlich.

Ein weiterer Vorteil besteht darin, dass man bei Einsatz eines erfindungsgemäß arbeitenden Intervallschalters keinen Wischermotor mit zwei Geschwindigkeitsstufen mehr braucht, weil die langsamere der beiden Geschwindigkeitsstufen auch durch einen Intervallbetrieb mit kurzer Pausenzeit verwirklicht werden kann. Die sonst beim Wischermotor vorgesehene zweite Antriebswicklung ist deshalb entbehrlich und damit der Einsatz preiswerterer Wischermotoren möglich, wenn man einen solchen Intervallschalter bereits in der Erstausrüstung von Kraftfahrzeugen verwendet.

Die erfindungsgemäße Steuerschaltung des Intervallschalters wird anhand der beigefügten Zeichnungen näher erläutert.
- Figur 1: ist ein Schaltplan einer Steuerschaltung, die das Durchführen des erfindungsgemäßen Verfahrens gestattet;
- Figur 2: ist ein Zustandsdiagramm, welches die Funktionsweise der in Fig. 1 dargestellten Steuerschaltung verdeutlicht,
- Figur 3: ist ein gegenüber dem in Fig. 1 dargestellten Schaltplan ein ergänzter Schaltplan einer Steuerschaltung,
- Figur 4: ist ein Zustandsdiagramm, welches die Funktionsweise der in Fig. 3 dargestellten Steuerschaltung verdeutlicht,
- Figur 5: ist eine Darstellung des Wischfeldes und der Stellungen, die der Wischer darin einnehmen kann,
- Figur 6: ist ein gegenüber dem in Fig. 3 dargestellten Schaltplan nochmals ergänzter Schaltplan einer Steuerschaltung,
- Figur 7: ist ein Zustandsdiagramm, welches die Funktionsweise der in Fig. 6 dargestellten Steuerschaltung verdeutlicht,
- Figur 8: zeigt einen steckbaren Intervallschalter mit einem Anschlußsockel und einer Leiterplatte, die auf ihrer einen Seite ein Relais und auf ihrer anderen Seite eine Steuerschaltung trägt,
- Figur 9: zeigt den Intervallschalter aus Fig. 8 in einer um 90° verdrehten Lage in der Ansicht auf die die Steuerschaltung tragende Seite der Leiterplatte, und die
- Figur 10: zeigt den Intervallschalter in einer Ansicht auf die im Vergleich zur Fig. 9 gegenüberliegende Seite der Leiterplatte.

Die Steuerschaltung umfaßt eine Einschaltbaugruppe 1, einen Taktgenerator 2 zum Erzeugen von Taktimpulsen Cₖ mit der gleichbleibenden Taktfrequenz f_{c}, einen Speicher 3 für das Speichern der Pausenzeit zwischen zwei Wischbewegungen, einen impulsgesteuerten Umschalter 4, einen Wählschalter 5 für die Betriebsart des Wischers, einen Impulsgenerator 6 zum Erzeugen von Ein- und Ausschaltimpulsen der Dauer T₁, einen Zähler 7, drei Dekoder 8, 9 und 10 für unterschiedliche Zählerstände, einen Speicher 11 und eine Anzahl von Gattern 12 bis 17 und 42, durch welche die vorgenannten Schaltungsteile logisch miteinander verknüpft sind.

Die Einschaltbaugruppe 1 verbindet die Steuerschaltung mit einer Stromquelle, insbesondere mit der Fahrzeugbatterie, und enthält zwei Impulsgeber, die nach dem Zuschalten der Betriebsspannung (welches vorzugsweise durch Einschalten der Zündung des Fahrzeugs erfolgt) einen längeren Impuls Po1 und einen kürzeren Impuls Po2 abgeben, welche vorzugsweise gleichzeitig enden. Der Impuls Po1 wird über eine Leitung 18 dem impulsgesteuerten Umschalter 4 zugeführt und bewirkt, dass dieser sich während der Dauer des Impulses Po1 in seinem Schaltzustand befindet, in welchem er die Leitung 19 mit dem Eingang des Speichers 3 verbindet. Über die Leitung 19 wird eine vorgegebene Zahl Zₛ, welche eine fest vorgegebene Pausenzeit darstellt, in den Speicher 3 geladen, sobald dieser den Impuls Po2 empfängt, der ihm über eine Leitung 20 und das ODER-Gatter 12 zugeführt wird.

Der Ausgang des Speichers 3 ist über eine Leitung 21 mit dem Dateneingang des Zählers 7 verbunden, dessen Ausgang Q über eine Leitung 22 mit dem Dekoder 8, über eine Leitung 23 mit dem Dekoder 9, über eine Leitung 24 mit dem Dekoder 10 und über eine Leitung 25 mit dem impulsgesteuerten Umschalter 4 und über diesen mit dem Dateneingang des Speichers 3 verbunden ist.

Der Wählschalter 5 ist erstens über eine Leitung 26 mit einem der Bestimmung der Zählrichtung dienenden Eingang des Zählers 7, zweitens über eine Leitung 27 mit dem Impulsgenerator 6 und drittens über eine Leitung 28 mit dem UND-Gatter 13 verbunden. Beim Einschalten des Wischers mittels des Wählschalters 5 wird der Zähler 7 so geschaltet, dass er als Rückwärtszähler arbeitet und die Taktimpulse Cₖ, welche seinem Zähleingang über eine Leitung 29 zugeführt werden, von einem Anfangszählerstand Zₐ abgezogen werden. Ausserdem wird beim Einschalten des Wischers mittels des Wählschalters 5 der Impulsgenerator 6 veranlaßt, einen Einschaltimpuls E abzugeben, welcher erstens dem UND-Gatter 14, zweitens dem NICHT-UND-Gatter 15 und drittens dem ODER-Gatter 16 zugeführt wird. Der Ausgang des ODER-Gatters 16 ist über eine Leitung 30 mit dem Antrieb des Wischers verbunden; jedesmal, wenn am Ausgang des ODER-Gatters 16 ein Impuls erscheint, wird eine Wischbewegung gestartet.

Beim Ausschalten des Wischers mittels des Wählschalters 5 wird der Zähler 7 so umgeschaltet, dass er als Vorwärtszähler arbeitet und der Impulsgenerator 6 wird veranlaßt, über einen zweiten Ausgang einen Ausschaltimpuls A abzugeben, welcher einerseits dem ODER-Gatter 16 und andererseits dem ODER-Gatter 17 zugeführt wird, dessen Ausgang über eine Leitung 31 mit einem Rückstelleingang (Reset) des Zählers 7 verbunden ist. Mit demselben Rückstelleingang des Zählers 7 ist über eine Leitung 32 auch die Einschaltbaugruppe 1 verbunden, welche nach dem Einschalten der Betriebsspannung mittels des Impulses Po1 den Zähler 7 auf Null zurückstellt.

Der Dekoder 8 dient zum Erkennen von Zählerständen Z₀ = 0 bis zu einem vorgegebenen Zählerstand Zₚ≧ 0, und wenn ein solcher Zählerstand erreicht wird, gibt der Dekoder 8 über die Leitung 32 ein Signal an das UND-Gatter 13 ab, dessen Ausgang über eine Leitung 33 mit einem der drei Eingänge des ODER-Gatters 16 verbunden ist.

Der Dekoder 9 dient zum Erkennen von Zählerständen, die kleiner sind als der maximale Zähler- stand Zₘₐₓ, aber größer sind als der vorgegebene Zählerstand Zₚ . Wird ein solcher Zählerstand erkannt, wird über die Leitung 34 ein Signal an einen der beiden nicht invertierenden Eingänge des NICHT-UND-Gatters 15 abgegeben.

Der Dekoder 10 dient zum Erkennen des maximalen Zählerstandes Zₘₐₓ. Wird dieser Zählerstand erkannt, wird über die Leitung 35 ein Signal an den Speicher 11 abgegeben, welcher lediglich zwei Werte speichern kann, nämlich den Wert 1, wenn der maximale Zählerstand erreicht wurde, und den Wert 0 , wenn der Speicher 11 zugerückgestellt wurde; das Zurückstellen kann zum einen über eine Leitung 36 erfolgen, welche den Rückstelleingang des Speichers 11 über ein ODER-Gatter 42 mit dem Ausgang des UND-Gatters 13 verbindet; ausserdem kann der Speicher 11 anfänglich durch den Impuls Po1 zurückgestellt werden, welcher dem Rückstelleingang des Speichers 11 über die Leitung 37 und das ODER-Gatter 42 übermittelt wird. Der Ausgang des Speichers 11 ist über eine Leitung 38 mit dem invertierenden Eingang des NICHT-UND-Gatters 15 verbunden, dessen Ausgang über eine Leitung 39 mit dem ODER-Gatter 12 verbunden ist. Ausserdem ist der Ausgang des Speichers 11 über eine Leitung 40 mit dem UND-Gatter 14 und dessen Ausgang über eine Leitung 41 mit dem ODER-Gatter 17 verbunden.

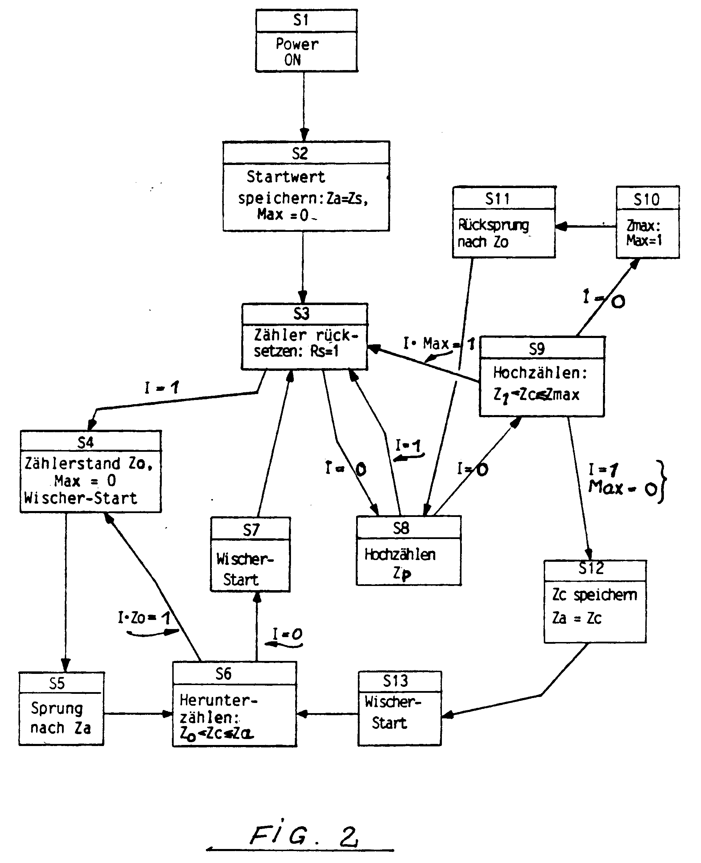

Die Funktionsweise der Schaltung wird nachstehend anhand des in Fig. 2 dargestellten Zustandsdiagramms erläutert.

Mit dem Zuschalten der Betriebsspannung mittels der Einschaltbaugruppe 1 befindet sich die Steuerschaltung im Zustand S1. Die Einschaltbaugruppe 1 gibt die Impulse Po1 und Po2 ab und geht in den Zustand S2 über, in welchem in den Speicher 3 als Startwert die Zahl Zs gespeichert und der Speicher 11, welcher das Erreichen des maximal möglichen Zählerzustandes Zₘₐₓ anzeigt, auf Null zurückgestellt wird. Die Zahl Zₛ entspricht einer fest vorgegebenen Pausenzeit, mit welcher die Steuerschaltung startet.

Danach wird im Zustand S3 ein Rückstellimpuls Rₛ erzeugt und der Zähler 7 durch das von der Einschaltbaugruppe kommende Signal Po1 auf Null zurückgestellt.

Nachstehend sei angenommen, dass sich der Wählschalter 5 in seiner AUS-Stellung befindet (Schaltzustand I = 0): Dann arbeitet der Zähler 7 als Vorwärtszähler und zählt die ihm vom Taktgenerator 2 zugeführten Impulse Cₖ, durchläuft dabei den Zustand S8 (Zählerstand ≦ Zₚ) und den Zustand S9, in dem der aktuelle Zählerstand Z_{c} größer ist als Zₚ, und gelangt in den Zustand S10, in welchem der maximal mögliche Zählerstand Zₘₐₓ erreicht ist. Dieser größte Zählerstand wird vom Dekoder 10 erkannt, welcher deshalb in den Speicher 11 den Wert Max = 1 eingibt. Durch Überlaufen springt der Zähler 7 auf den Zählerstand Zₒ = 0 zurück und der Zähler 7 beginnt erneut, die Impulse Cₖ vorwärts zu zählen (Zustand S8 und S9).

Wird der Wischer während des Hochzählens im Zustand S8, also spätestens bei Erreichen des vorgegebenen Zählerstandes Zₚ, eingeschaltet (I = 1), dann durchläuft die Steuerschaltung die Zustände S3, S4, S5 und S6. Der Impulsgenerator 6 gibt nämlich einen Einschaltimpuls E ab, der über das UND-Gatter 14 und das ODER-Gatter 17 den Zähler 7 auf Z₀ = 0 zurückstellt und gleichzeitig über das ODER-Gatter 16 eine erste Wischbewegung startet. Sofern in dieser Phase im Speicher 11 noch der Wert 1 steht, wird der Speicher 11 über die vom UND-Gatter 13 kommende Leitung 36 auf den Wert 0 zurückgestellt. Gleichzeitig wird die im Speicher 3 gespeicherte Zahl Zₛ als Anfangszählerstand Zₐ in den Zähler 7 übernommen und der nun als Rückwärtszähler arbeitende Zähler zählt ausgehend von diesem Anfangszählerstand Zₐ an rückwärts. Wird der Zählerstand Z₀ = 0 erreicht, wird über das UND-Gatter 13, die Leitung 33, das ODER-Gatter 16 und die Leitung 30 erneut eine Wischbewegung gestartet, der Zähler 7 zurückgesetzt und es beginnt ein neuer Zyklus über die Zustände S4, S5 und S6. Dies entspricht einer Betriebsweise der Intervallschaltung, in welcher dem Fahrer die im Speicher 3 gespeicherte Pausenzeit gerade recht ist. In denselben Zyklus gelangt man auch, wenn der Wählschalter 5 bereits beim Zuschalten der Betriebsspannung (im Zustand S1 und im Zustand S2) oder beim erstmaligen Zurücksetzen des Zählers 7 (Zustand S3) eingeschaltet war.

Soll die Pausenzeit zwischen zwei Wischbewegungen verlängert oder verkürzt werden, dann betätigt der Fahrer den Wählschalter 5 im Zustand S6 vor Erreichen des Zählerstandes Z₀ = 0. Der dabei erzeugte Ausschaltimpuls A des Impulsgenerators 6 startet zum einen über das ODER-Gatter 16 eine weitere Wischbewegung und gleichzeitig setzt er den Zähler 7 über das ODER-Gatter 17 auf Null zurück (Zustände S7 und S3). Der nun als Vorwärtszähler laufende Zähler 17 beginnt die ihm zugeführten Impulse Cₖ zu zählen (Zustände S8 und S9). Ist die Scheibe des Fahrzeuges nach einiger Zeit so feucht geworden, dass der Fahrer sie gewischt haben möchte, betätigt er erneut den Wählschalter 5. Die Steuerschaltung wird sich in diesem Moment im Zustand S9 befinden. Der Zählvorgang wird bei dem Betätigen des Wählschalters 5 unterbrochen und der Dekoder 9 spricht an; die beiden nicht invertierenden Eingänge des Sperrgatters 15 haben den Einschaltimpuls E und das Ausgangssignal des Dekoders 9 empfangen, der invertierende Eingang des Sperrgatters 15 empfängt vom Speicher 11 das Signal Max = 0, welches bedeutet, dass im Zähler 7 der maximale Zählerstand Zₘₐₓ nicht erreicht wurde. Nur in diesem Zustand gibt das Sperrgatter 15 über das ODER-Gatter 12 ein Signal an den Speicher 3 ab, welches zur Folge hat, dass der aktuelle Zählerstand über die Leitung 25 und den Umschalter 4 in den Speicher 3 übertragen wird; der aktuelle Zählerstand beinhaltet die Pausenzeit zwischen den beiden vorangegangenen, vom Fahrer von Hand ausgelösten Wischbewegungen. Diese Pausenzeit ist der augenblicklichen Niederschlagsmenge angemessen, so dass der Fahrer davon ausgehen kann, dass eine erneute Änderung der Pausenzeit erst erforderlich ist, wenn sich die Niederschlagsmenge wesentlich geändert hat.

Die neu gespeicherte Pausenzeit (Zustand S12) wird als neuer Anfangszählerstand Zₐ in den Zähler 7 übertragen, der mit Auslösung der Wischbewegung (Zustand S 13) beginnt, rückwärts zu zählen: Die Steuerschaltung befindet sich wieder im Zyklus der Zustände S6-S4-S5-S6.

Läuft nach einem Ausschalten des Intervallbetriebs der Zähler 7 über, wird keine neue Pausenzeit in den Speicher eingegeben, vielmehr bleibt die zuletzt eingespeicherte Pausenzeit, welche dem Zählerstand Zₐ entspricht, erhalten.

Der Zählerstand Zₚ , bis zu welchem im Zustand S8 gezählt wird, wird so niedrig gewählt, dass ihm eine Pausenzeit von nur wenigen Sekunden, vorzugsweise von nicht mehr als 2 s, entspricht. Dadurch kann sichergestellt werden, dass der Fahrer keine Pausenzeit einstellen kann, die kürzer ist als ein einzelner Wischvorgang.

Befindet sich der Wählschalter 5 in seiner Schaltstellung "Wischbetrieb AUS" und ist die Steuerschaltung über die Zustände S1, S2, S3 und S8 in den Zustand S9 gelangt und wird in diesem Zustand vor Erreichen des maximalen Zählerstandes Zₘₐₓ der Wählschalter 5 in seine Schaltstellung "Intervallbetrieb EIN" gebracht und dadurch der Zählvorgang gestoppt, dann wird der aktuelle Zählerstand Z_{c} auf dem bereits beschriebenen Wege als Maß für eine neue Pausenzeit in den Speicher 3 übernommen (Zustand S12), eine Wischbewegung gestartet (Zustand S13) und der Zustand S6 erreicht, mit dem erneut der Zyklus S6-S4-S5-S6 beginnt.

Die Kapazität des Speichers 3 und des Zählers 7 müssen nicht groß sein. Eine geeignete Schaltungsauslegung ist die folgende:
Auslegung des Speichers 3 und des Zählers 17 auf eine Bitzahl von n = 7 bit,
Frequenz des Taktgenerators 2 f_{c} = 3 Hz,
Fest vorgegebener Startwert für die Pausenzeit: 5 s entsprechend einer anfänglich in den Speicher 3 zu ladenden Zahl Zₛ = 15,
Länge der Impulse des Impulsgenerators 6 : T1 = 1 ms.

Damit erhält man eine Intervallschaltung mit Pausenzeiten zwischen 2 s und 43 s, einstellbar in Schritten von jeweils 1/3 s.

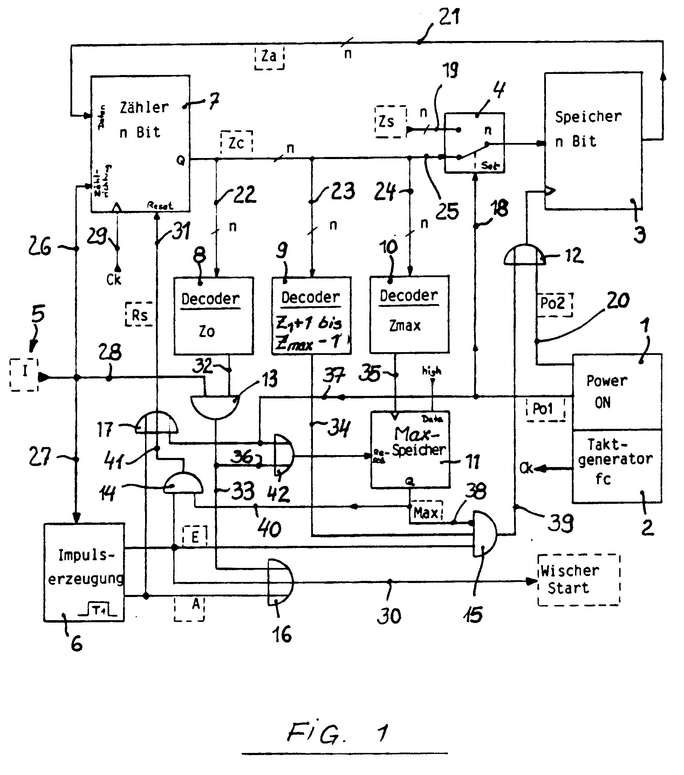

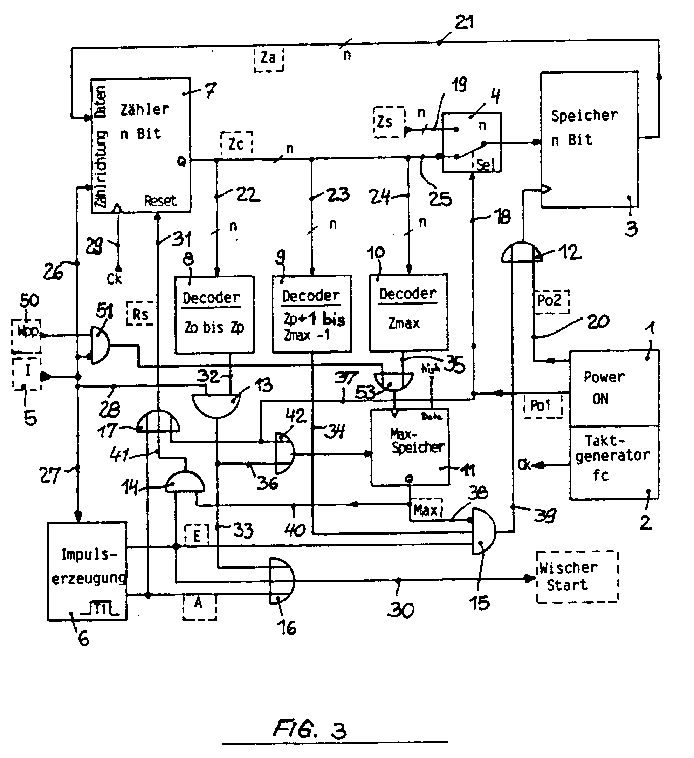

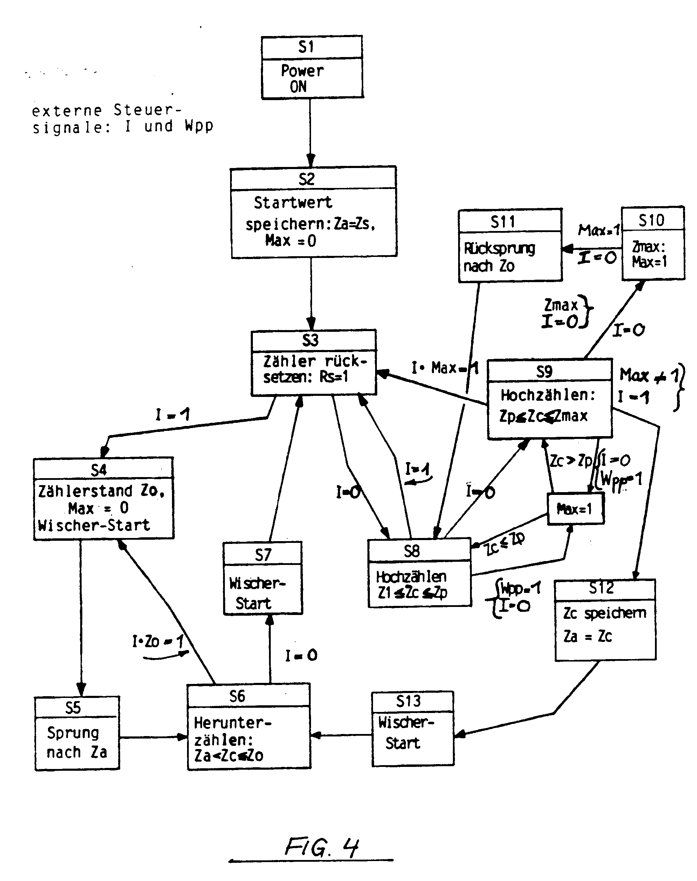

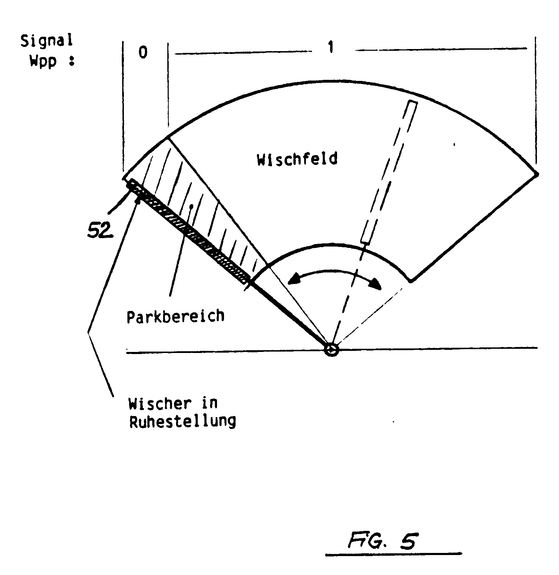

Der in Fig. 3 dargestellte Schaltplan unterscheidet sich von dem in Fig. 1 dargestellten Schaltplan nur darin, dass zusätzlich ein Sensor 50 vorgesehen ist, der in der Lage ist, festzustellen, ob sich der Wischer in seiner Ruhestellung befindet oder nicht. Bei diesem Sensor kann es sich um einen bei Scheibenwischern üblicherweise verwendeten sogenannten Parkschalter handeln, dessen Aufgabe darin besteht, sicherzustellen, dass der Scheibenwischer beim Überführen seines Betätigungsschalters in die Schaltstellung "AUS" stets bis in seine Ruhestellung läuft, die sich in einem gewissen Bereich (nachfolgend als Parkbereich bezeichnet) am einen Rand des Wischfeldes befindet (siehe Fig. 5) . Der Parkschalter 50 sorgt dafür, dass der Strom für den Wischermotor erst unterbrochen wird, wenn sich der Wischer im Parkbereich befindet. Am Parkschalter 50 kann mithin ein Signal gewonnen werden, welches Auskunft darüber gibt, ob der Strom zum Wischermotor unterbrochen ist, sich der Wischer 52 also im Parkbereich befindet; dieses Signal wird als Wpp = 0 bezeichnet. Es kann ferner am Parkschalter 50 ein Signal gewonnen werden, welches angibt, dass der Strom zum Wischermotor nicht unterbrochen ist. Dieses Signal wird als Wpp = 1 bezeichnet. Zusammen mit dem Signal des Wählschalters 5, welches angibt ob der Intervallbetrieb eingeschaltet ist (I = 1) oder ob der Intervallbetrieb ausgeschaltet ist (I = 0), kann damit erkannt werden, ob die Wischer-Funktion "Dauerbetrieb EIN" eingeschaltet ist, da der Wählschalter 5 bei Dauerbetrieb EIN" den Intervallbetrieb ausschaltet (I = 0): Liegen die Signale I = 0 und Wpp = 1 vor, bedeutet das, dass der Wischer in Dauerbetrieb eingeschaltet ist. Das gemeinsame Auftreten der Signale I = 0 und Wpp = 1 kann daher dazu benutzt werden, innerhalb der Steuerschaltung den Dauerbetrieb zu erkennen, und zwar dadurch, dass durch das gemeinsame Auftreten dieser beiden Signale der Speicher 11 auf jenen Wert Max = 1 gesetzt wird, auf den der Speicher 11 sonst gesetzt wird, wenn durch den Dekoder 10 erkannt wird, dass der Zähler 7 seinen maximalen Zählerstand Zₘₐₓ erreicht hat. Die Ausgänge des Wählschalters 5 und des Sensors 50 sind deshalb über das NICHT-UND-Gatter 51 sowie über ein ODER-Gatter 53 mit dem Eingang des Speichers 11 verbunden. Über das ODER-Gatter 53 ist auch der Ausgang des Dekoders 10 mit dem Speicher 11 verbunden. Durch diese Ergänzung der Steuerschaltung wird verhindert, dass beim Übergang vom Dauerbetrieb in Intervallbetrieb oder auch von der Schaltstellung "Wischbetrieb AUS" in den Intervallbetrieb, wenn zuvor der Dauerbetrieb eingeschaltet war, eine neue Pausenzeit, die in diesem Fall nicht sinnvoll ist, eingestellt wird. Im Zustandsdiagramm in Fig. 4 ist diese Ergänzung der Steuerschaltung dadurch berücksichtigt, dass angegeben ist, dass aus den Zuständen S8 und S9 heraus beim Übergang auf Dauerbetrieb des Wischers (I = 0 und Wpp = 1) der Speicher 11 auf den Wert Max = 1 gesetzt wird, wodurch die Steuerschaltung während des Dauerbetriebes in den Zuständen S8 bzw. S9 gehalten wird, aber nicht in den Zustand S12 übergehen kann, in dem sonst eine neue Pausenzeit gespeichert würde.

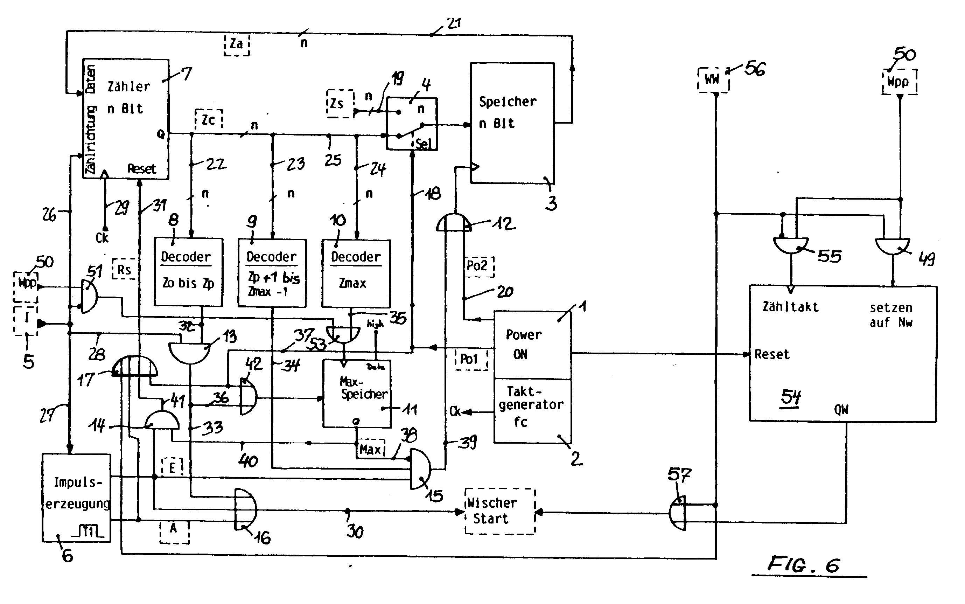

Der in Figur 6 angegebene Schaltplan unterscheidet sich von dem in Fig. 3 angegebenen Schaltplan lediglich darin, dass ein weiterer Zähler 54 vorgesehen ist, dessen Zähleingang über ein NICHT-UND-Gatter 55 mit dem Sensor 50 und dem Betätigungsschalter 56 einer an sich bekannten Scheibenwaschanlage verbunden ist. Über einen gesonderten Setzeingang kann der Zähler 54 auf eine vorgegebene Zahl Nw gesetzt werden, welche angibt, wieviele Wischbewegungen der Wischer nach Übergang des Betätigungsschalters 56 in seine Schaltstellung "Wisch-Wasch-Betrieb AUS" noch ausführt. Beim Übergang in diese Schaltstellung wird üblicherweise sofort die Wasserpumpe der Scheibenwaschanlage ausser Betrieb gesetzt, so dass kein Waschwasser mehr auf die Windschutzscheibe gespritzt wird. Der Wischer läuft jedoch üblicherweise noch nach. Der Nachlauf beträgt typisch 3 bis 5 Wischvorgänge. Bei herkömmlichen Scheibenwaschanlagen wird der Nachlauf des Wischers durch ein Zeitrelais bestimmt, und zwar durch die Ladezeit oder Entladezeit eines Kondensators. Durch Streuung der Kapazitätswerte der Kondensatoren findet man bei den bekannten Scheibenwaschanlagen eine entsprechende Steuung der Nachlaufzeiten, wodurch es zu einer unterschiedlichen Anzahl von Nachwischvorgängen kommt. Bei dem erfindungsgemäßen Intervallschalter mit Wisch-Wasch-Funktion, wie er in Fig. 6 dargestellt ist, ist das anders, weil dort die Nachwischvorgänge nicht durch ein Zeitglied bestimmt werden, sondern exakt ausgezählt werden. Dazu wird der Zähler 54 durch Betätigen des Schalters 56 (WW = 1) auf die Zahl Nw gesetzt, wenn sich zugleich der Wischer ausserhalb seines Parkbereiches befindet (Wpp = 1). Zu diesem Zweck sind der Betätigungsschalter 56 und der Sensor 50 über ein UND-Gatter 49 mit dem Setzeingang des Zählers verbunden. Dieser Zähler 54 wird nachstehend auch als Nachlaufzähler bezeichnet. Weil der Betätigungsschalter 56 und der Sensor 50 mit dem Zähleingang des Nachlaufzählers 54 über das NICHT-UND-Gatter 55 verbunden sind, wird dann, wenn der Betätigungsschalter 56 in seine Schaltstellung "Wisch-Wasch-Betrieb-AUS" übergeht (WW = 0), der Nachlaufzähler mit Hilfe des bei jedem Wischvorgang einmal auftretenden Signales Wpp auf 0 heruntergezählt, sodass nach Beendigung des Wasch-Vorganges der Wischer die momentane Wischbewegung und noch Nw weitere Wischbewegungen ausführt. Solange der Zählerstand des Nachlaufzählers 54 von 0 verschieden ist, gibt dieser ein Ausgangssignal ab, welches über ein ODER-Gatter 57 dem Wischermotor zugeführt wird. Der Wischermotor wird angesteuert, solange der Zählerstand des Nachlaufzählers 54 von 0 verschieden ist. Das ODER-Gatter 57 ist ferner mit dem Betätigungsschalter 56 verbunden, wodurch der Wischermotor sogleich mit dem Betätigen dieses Schalters 56 anläuft.

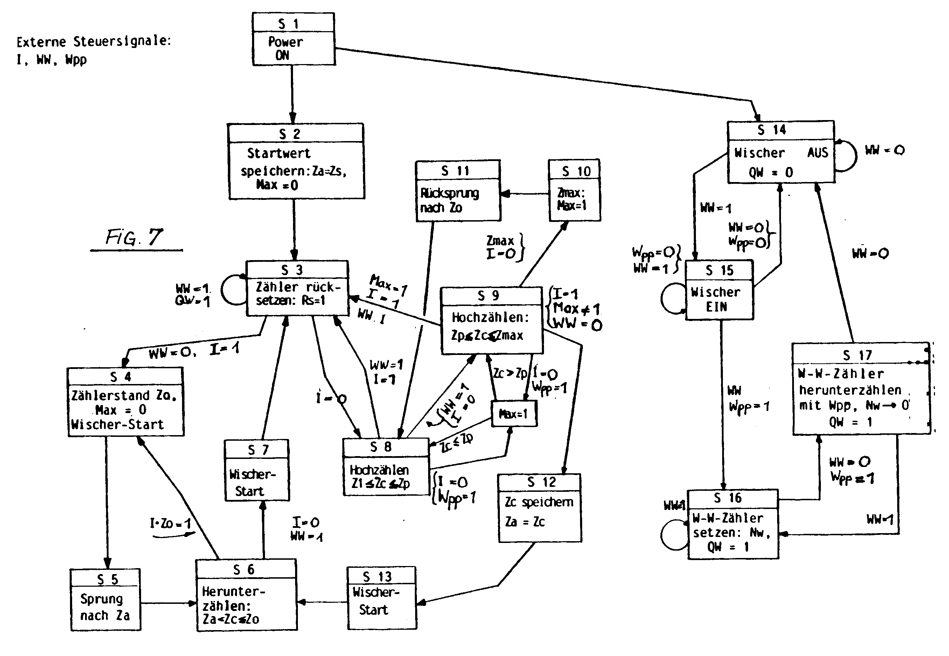

Figur 7 zeigt das zum Schaltplan gemäß Figur 6 gehörende Zustandsdiagramm, welches sich vom Zustandsdiagramm in Fig. 4 nur in der zusätzlichen Wisch-Wasch-Funktion unterscheidet. Im Zustand S14 ist der Wischer ausgeschaltet, der Nachlaufzähler 54 gibt kein Signal ab (QW = 0). Sobald der Betätigungsschalter 56 betätigt wird (WW = 1) geht die Schaltung in den Zustand S15 über, in welchem der Wischer läuft. Das gleichzeitige Auftreten des Signales WW = 1 und des Signales Wpp = 1, welches bestätigt, dass der Wischer tatsächlich läuft, läßt die Schaltung in den Zustand S16 übergehen, in welchem der Nachlaufzähler auf die Zahl Nw gesetzt wird, worauf am Ausgang des Nachlaufzählers das den Nachlauf des Wischers betätigende Signal erscheint, welches dem ODER-Gatter 57 zugeführt wird (Signal QW = 1). Geht der Betätigungsschalter 56 in seine Schaltstellung "Wisch-Wasch-Betrieb AUS" über, z.B. dadurch, dass man einen entsprechenden Betätigungshebel losläßt, dann geht die Schaltung in den Zustand S17 über, in welchem der Nachlaufzähler 54 auf 0 heruntergezählt wird. Danach geht die Schaltung in den Zustand S14 über, sofern nicht zwischenzeitlich der Betätigungsschalter 56 erneut betätigt wurde, wodurch die Steuerschaltung in den Zustand S16 übergehen würde. Aus dem Zustand S15 geht die Schaltung auch dann in den Zustand S14 über, wenn der Betätigungsschalter 56 nur kurzzeitig betätigt wird. Kurzzeitig soll bedeuten, dass das Signal WW bereits wieder 0 ist, bevor das Signal Wpp = 1 wird. In diesem Fall ist ein einmaliger Wischvorgang möglich, durch den die laufende Pause im Intervallbetrieb abgekürzt wird, ohne dass dadurch die eingestellte Pausenzeit verändert wird. Dadurch kann während des Intervallbetriebes ein vorzeitiger Wischvorgang ausgelöst werden, wenn das nötig sein sollte, z.B. weil durch ein entgegenkommendes Auto ein Wasserschwall auf die Windschutzscheibe geschleudert worden ist.

Da während des Intervallbetriebes die Wisch-Wasch-Funktion betätigt werden kann, ist es sinnvoll, den Zähler 7 durch die Betätigung des Schalters 56 zurückzusetzen. Zu diesem Zweck ist der Schalter 56 mit dem ODER-Gatter 17 verbunden. Dadurch wird der Zähler 7 auch beim nur kurzzeitigen Betätigen des Schalters 56 zur Auslösung eines einmaligen Wischvorganges zurückgesetzt, und die Pausenzeitzählung wird erst nach der letzten durch den Schalter 56 ausgelösten Wischbewegung wieder gestartet.

Es sei noch vermerkt, dass der Nachlaufzähler 54 auf jeden Fall mit dem Einschalten der Steuerschaltung mit Hilfe der Einschaltbaugruppe 1 auf 0 zurückgestellt wird (siehe Figur 6).

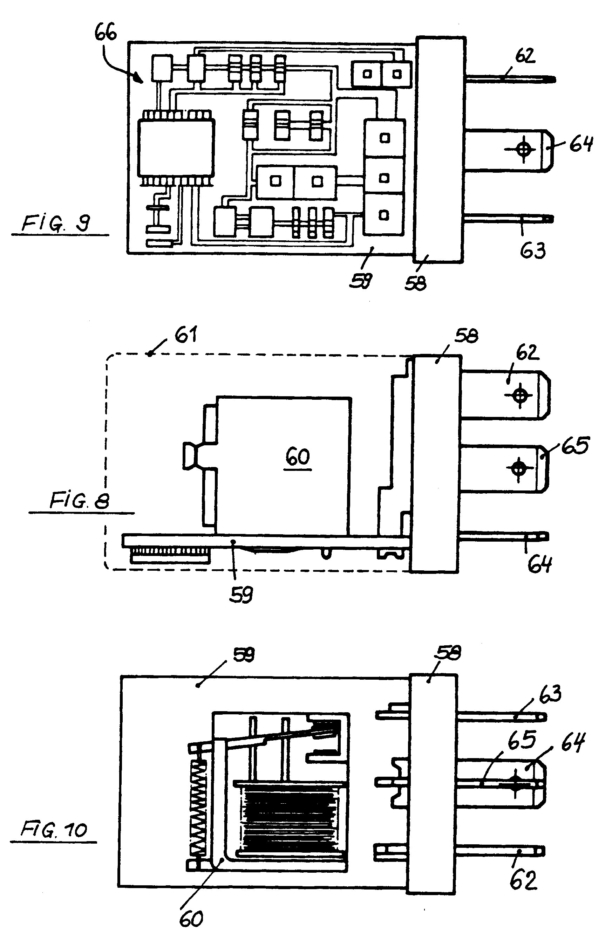

Der in den Figuren 8 bis 10 dargestellte Intervallschalter hat einen Sockel 58 mit mehreren Steckkontakten 62, 63, 64 und 65. Ferner trägt der Sockel 58 eine Leiterplatte 59, auf deren einer Seite ein Relais 60 für die Betätigung des Wischermotors und auf der gegenüberliegenden Seite eine erfindungsgemäße Steuerschaltung 66 angeordnet sind. Die Leiterplatte 59 mit Relais 60 und Steuerschaltung 66 sind von einem in Fig. 8 nur schematisch angedeuteten Gehäuse 61 umschlossen, welches auf dem Sockel 58 fußt. Die Abmessungen des Intervallschalters und seine Steckkontakte 62 bis 65 sind so gewählt, dass er ohne weiteres gegen einen konventionellen Intervallschalter ausgetauscht werden kann.

## Patentansprüche

1. Verfahren zur Steuerung des Wischintervalls von Scheibenwischern in Fahrzeugen durch Beobachten und Einstellen der Pausenzeit zwischen zwei aufeinanderfolgenden Wischbewegungen mit Hilfe eines Schalters und mit Hilfe einer elektrischen Steuerschaltung, durch welche der zeitliche Abstand zwischen zwei aufeinanderfolgenden Wischbewegungen (nachstehend als Pausenzeit bezeichnet), von denen zumindest die zweite Wischbewegung durch Betätigen des Schalters willkürlich gestartet wurde, gemessen, der Meßwert gespeichert und anschließend solange als Pausenzeit beibehalten wird, wie nicht durch erneutes willkürliches Starten von Wischbewegungen durch erneutes Betätigen des Schalters eine andere Pausenzeit gespeichert oder der Intervallwischbetrieb des Scheibenwischers unterbrochen oder die Steuerschaltung stromlos gemacht wird, wobei sowohl zum Verlängern als auch zum Verkürzen der Pausenzeit der Schalter in derselben Weise betätigt, damit zugleich eine einmalige Wischbewegung gestartet, nach einer willkürlich gewählten Pausenzeit der Schalter erneut betätigt und diese Pausenzeit gemessen und gespeichert wird, dadurch gekennzeichnet, dass das Einstellen der Pausenzeit mit Hilfe eines ohnehin vorhandenen Wählschalters erfolgt, der wenigstens die Schaltstellungen "Wischbetrieb AUS" und "Intervallbetrieb EIN" aufweist, indem der Wählschalter sowohl zum Verlängern als auch zum Verkürzen der Pausenzeit in die Schaltstellung "Wischbetrieb AUS" und nach der gewünschten Pausenzeit in die Schaltstellung "Intervallwischbetrieb EIN" überführt wird, wobei durch Ausschalten und Wiedereinschalten zwei Wischbewegungen willkürlich ausgelöst werden.

2. Verfahren nach Anspruch 1, dadurch gekennzeichnet, dass man den zuletzt gespeicherten Wert der Pausenzeit auch über eine Unterbrechung des Intervallbetriebs hinweg speichert, bis die Steuerschaltung stromlos wird.

3. Verfahren nach Anspruch 1 oder 2, dadurch gekennzeichnet, dass der Intervallwischbetrieb beim erstmaligen Überführen des Wählschalters in seine Schaltstellung "Intervallbetrieb EIN" mit einer fest vorgegebenen Pausenzeit beginnt.

4. Verfahren nach einem der vorstehenden Ansprüche, dadurch gekennzeichnet, dass Pausenzeiten, die kürzer sind als ein einzelner Wischvorgang, nicht gespeichert werden.

5. Verfahren nach einem der vorstehenden Ansprüche, dadurch gekennzeichnet, dass durch Betätigen eines Schalters, der eine Schaltstellung "Vorzeitiger Wischvorgang EIN" hat, die laufende Pausenzeit ohne Änderung der gespeicherten Pausenzeit verkürzt wird, so dass ein vorzeitiger Wischvorgang abläuft, mit welchem die gespeicherte Pausenzeit erneut zu laufen beginnt.

6. Verfahren nach einem der vorstehenden Ansprüche, dadurch gekennzeichnet, dass bei Vorhandensein einer Scheibenwaschanlage deren Wisch-Wasch-Funktion unter Verkürzung der laufenden Pausenzeit ohne Änderung der gespeicherten Pausenzeit gestartet werden kann, und dass mit dem letzten zur Wisch-Wasch-Funktion gehörenden Wischvorgang die gespeicherte Pausenzeit erneut zu laufen beginnt.

7. Intervallschalter für durch einen Elektromotor angetriebene Scheibenwischer in Fahrzeugen, mit einem in einem Gehäuse gekapselten Relais für die Betätigung des Wischers und mit einer Steuerschaltung für den Betrieb des Wischers, insbesondere zum Durchführen des Verfahrens nach Anspruch 1, dadurch gekennzeichnet, dass die Steuerschaltung im Gehäuse des Relais angeordnet ist.

8. Intervallschalter für durch einen Elektromotor angetriebene Scheibenwischer in Fahrzeugen, insbesondere zum Durchführen des Verfahrens nach Anspruch 1,
mit einer Einschaltbaugruppe (1), über welche die Steuerschaltung mit Strom versorgt wird,
mit einem programmierbaren Speicher (3) für die Pausenzeit,
mit einem Zähler (7) für die Ermittlung der Pausenzeit, in welchen der Inhalt des Speichers (3) übertragen wird,
mit einem Taktimpulsgenerator (2), dessen Impulse dem Zähleingang des Zählers (7) zugeführt werden,
mit einem Wählschalter (5) für die Betriebsart des Wischers, und
mit Gattern (12 bis 17 und 42), durch welche Schaltungsteile der Steuerschaltung logisch miteinander verknüpft sind,
dadurch gekennzeichnet, dass der Zähler (7) ein wahlweise vorwärts oder rückwärts zählender Zähler ist, in welchen bei Rückwärtsbetrieb der Inhalt des Speichers (3) als Anfangszählerstand Zₐ übertragen wird,
dass ein Dekoder (8) für die Erkennung des niedrigsten Zählerstandes (Z₀ = 0),
ein Dekoder (10) für die Erkennung des höchstmöglichen Zählerstandes (Zₘₐₓ), und ein ihm nachgeschalteter Speicher (11), dessen Inhalt angibt, ob beim letzten Vorwärtszählvorgang der höchstmögliche Zählerstand (Zₘₐₓ) erreicht wurde,
ein Dekoder (9) für die Erkennung von Zählerständen Z_{c}, die kleiner als Zₘₐₓ und größer als ein vorgegebener Zählerstand Zₚ > Z₀ sind,
und ein Impulsgenerator (6), welcher bei jeder Betätigung des Wählschalters (5) einen Impuls abgibt, vorgesehen sind.

9. Intervallschalter nach Anspruch 8, dadurch gekennzeichnet, das der Dateneingang des Speichers (3) für die Pausenzeit über einen steuerbaren Umschalter (4) entweder mit dem Ausgang des Zählers (7) oder mit einem Festwertspeicher verbunden ist, welcher den Wert Zₛ einer fest vorgegebenen Pausenzeit enthält.

10. Intervallschalter nach Anspruch 9, dadurch gekennzeichnet, dass der Umschalter (4) durch die Einschaltbaugruppe (1) angesteuert wird.

11. Intervallschalter nach einem der Ansprüche 8 bis 10, dadurch gekennzeichnet, dass der Zähler (7) als Vorwärtszähler arbeitet, wenn der EIN/AUS-Schalter (5) sich im Zustand AUS befindet, und dass der Zähler (7) sonst als Rückwärtszähler arbeitet.

12. Intervallschalter nach einem der Ansprüche 8 bis 11, dadurch gekennzeichnet, dass der Ausgang des Speichers (11) für den maximalen Zählerstand (Zₘₐₓ) mit dem Eingang des Speichers (3) für die Pausenzeit in der Weise verknüpft ist, dass die zuletzt gespeicherte Pausenzeit im Speicher (3) erhalten bleibt, wenn der Zähler (7) nach einem Ausschalten des Intervallbetriebs (I = 0) überläuft.

13. Intervallschalter nach Anspruch 12, dadurch gekennzeichnet, dass ein Sensor (50) vorgesehen ist, der ein erstes Signal (Wpp = 0) abgibt, wenn sich der Wischer in seiner Ruhestellung befindet und der ein anderes Signal (Wpp = 1) abgibt, wenn sich der Wischer ausserhalb seiner Ruhestellung im Wischfeld befindet,
und dass der Ausgang dieses Sensors (50) und der Ausgang des Wählschalters (5) über ein NICHT-UND-Gatter (51) in der Weise mit dem Speicher (11) für den maximalen Zählerstand (Zₘₐₓ ) verknüpft sind, dass dann, wenn der Wählschalter (5) in der Stellung "Dauerbetrieb EIN" (I = 0) und der Wischer sich ausserhalb seiner Ruhestellung im Wischfeld befindet (Wpp = 1), der Speicher (11) mit jenem Wert (Max = 1) geladen wird, mit dem er über den Dekoder (10) sonst geladen wird, wenn der maximale Zählerstand (Zₘₐₓ) erreicht ist.

14. Intervallschalter nach Anspruch 13, dadurch gekennzeichnet, dass ein Nachlaufzähler (54) vorgesehen ist, der durch den Sensor (50) und den Betätigungsschalter (56) einer Scheibenwaschanlage auf einen vorgegebenen Zahlenwert Nw gesetzt wird,
dass der Nachlaufzähler (54) mit den vom Sensor (50) kommenden Signalen Wpp vom Zahlenwert Nw rückwärts bis auf 0 oder von 0 vorwärts bis Nw zählt, sobald die Betätigung des Betätigungsschalters (56) endet und für die Dauer dieses Zählvorganges ein Signal (QW = 1) abgibt, welches den Wischermotor in Gang hält.

15. Intervallschalter nach einem der Ansprüche 8 bis 14, mit einem in einem Gehäuse gekapselten Relais für die Betätigung des Wischers, dadurch gekennzeichnet, dass die Steuerschaltung in dem das Relais (60) umgebenden Gehäuse (61) angeordnet ist.

## Claims

1. A method of controlling the interval of time between wiping movements of wipers in vehicles, wherein the interval of time between two consecutive wiping movements is observed and is set by means of an electric control circuit, by which the interval of time between two consecutive wiping movements (hereinafter called interval time) is measured, at least the second of said wiping movements has arbitrarily been started by an actuation of the switch, the measured value is stored and is subsequently used as interval time until a renewed arbitrary starting of wiping movements by a renewed actuation of the switch has been effected and another interval time is stored or the interval wiping operation of the wiper is interrupted or the control circuit is deenergized, wherein for a prolongation and for a shortening of the interval time the switch is actuated in the same manner so that a single wiping movement is started at the same time, the switch is actuated once more after an arbitrarily selected interval time, and said interval time is measured and stored, characterized in that the interval time is set by means of an anyway existing selector switch, which has at least the switch positions "wiping operation OFF" and "interval operation ON", in that for a prolongation and for a shortening of the interval time the selector switch is moved to the switch position "wiping operation OFF" and after the desired interval time is moved to the switch position "interval wiping operation ON", whereby two wiping movements are initiated arbitrarily by a turning-off operation followed by a turning-on operation.

2. A method according to claim 1, characterized in that the interval time value stored last is kept in storage even during an interruption of the interval operation until the control circuit is deenergized.

3. A method according to claim 1 or 2, characterized in that the interval wiping operation begins with a predetermined fixed interval time when the selector switch is moved to its switch position "interval operation ON" for the first time.

4. A method according to any of the preceding claims characterized in that interval times which are shorter than a single wiping operation are not stored.

5. A method according to any of the preceding claims, characterized in that the current interval time is shortened without a change of the stored interval time in that a switch is actuated which has a switch position "premature wiping operation ON" so that a premature wiping operation is performed with which the use of the stored interval time is resumed.

6. A method according to any of the preceding claims, characterized in that a washer is provided and the wiping-washing function of said plant is adapted to be started in conjunction with a shortening of the current interval time without a change of the stored interval time, and the use of the stored interval time is resumed with the last wiping operation performed in the wiping-washing mode.

7. An interval switch for an electric-motor-driven wiper in vehicles, comprising a relay, which is encapsulated in a housing and serves to actuate the wiper, and a control circuit for the operation of the wiper, particularly for carrying out the method according to claim 1, characterized in that the control circuit is accommodated in the housing of the relay.

8. An interval switch for an electric-motor-driven wiper in vehicles, particularly for carrying out the method according to claim 1, comprising
a turn-on subassembly (1) via which the control circuit is energized,
a programmable memory (3) for the interval time,
a counter (7) for determining the interval time, in which the contents of the memory (3) are transmitted,
a clock (2) for delivering pulses to the counting input of the counter (7),
a selector switch (5) for the mode of operation of the wiper, and
gates (12 o 17 and 42) by which circuit components of the control circuit are logically connected,
characterized in that the counter (7) is a selectively incrementing and decrementing counter, for receiving the contents of the memory (3) as an initial count Zₐ for a decrementing operation,
and there are provided
a decoder (8) for detecting the lowest count (Z₀ = 0),
a decoder (10) for detecting the highest possible count (Zₘₐₓ), and a memory (11), which succeeds the decoder (10) and the contents of which states whether the highest possible count (Zₘₐₓ) has been reached during the last incrementing operation,
a decoder (9) for detecting counts Z_{c} which are lower than Zₘₐₓ and higher than a predetermined count Zₚ> Z₀,
and pulse generator (6) for delivering a pulse in response to each actuation of the selector switch (5).

9. An interval switch according to claim 8, characterized in that the data input of the memory (3) for the interval time is connected by a controllable change-over switch (4) either to the output of the counter (7) or to a read-only memory, which contains the value Zₛ of a predetermined fixed interval time.

10. An interval switch according to claim 9, characterized in that the change-over switch (4) is controlled by the turn-on subassembly (1).

11. An interval switch according to any of claims 8 to 10, characterized in that the counter (7) operates as an incrementing counter when the ON-OFF switch (5) is in its state OFF, and the counter (7) operates otherwise as a decrementing ounter.

12. An interval switch according to any of claims 8 to 11, characterized in that the output of the memory (11) for the maximum count (Zₘₐₓ) is logically combined with the input of the memory (3) for the interval time in such a manner that the interval time stored last is kept in the memory (3) when the counter (7) overflows after the interval operation has been turned off (I = 0).

13. An interval switch according to claim 12, characterized in that a sensor (50) is provided, which delivers a first signal (Wpp = 0) when the wiper is in its position of rest, and which delivers a different signal Wpp = 1) when the wiper is disposed in the field to be wiped away from its position of rest,
and the output of that sensor (50) and the output of the selector switch (5) are logically combined by a NAND gate (51) with the memory (11) for the maximum count (Zₘₐₓ) in such a manner that when the selector switch (5) is in the position "continuous operation ON" (I = 0) and the wiper is disposed in the field to be wiped away from its position of rest (Wpp = 1), the memory (11) will be loaded with that value (Max = 1) with which it is otherwise loaded via the decoder (10) when the maximum count (Zₘₐₓ) has been reached.

14. An interval switch according to claim 13, characterized in that a follow-up counter (54) is provided, which is set to a predetermined count Nw by the sensor (50) and the actuating witch (56) of a washer,
the follow-up counter (54) receiving the signals Wpp from the sensor (50) decrements its count from Nw to zero or increments its count from zero to Nw as soon as the actuation of the actuating switch (56) has terminated, and said follow-up counter delivers during that counting operation a signal (QW = 1) which keeps the wiper motor running.

15. An interval switch according to any of claims 8 to 14, comprising a relay which is encapsulated in a housing and serves to actuate the wiper, characterized in that the control circuit is accommodated in the housing (61) which surrounds the relay (60).

## Revendications

1. Procédé de commande de l'intervalle de balayage d'essuie-glace dans des véhicules automobiles en observant et en réglant le temps de pause entre deux mouvements de balayage successifs à l'aide d'un commutateur et d'un montage de commande électrique par lesquels l'écart de temps entre deux mouvements de balayage successifs (désigné ci-dessous par temps de pause), dont au moins le second mouvement de balayage a été amorcé par actionnement du commutateur de manière arbitraire, est mesuré, la valeur de mesure stockée et ensuite conservée comme temps de pause aussi longtemps qu'un autre temps de pause n'est pas stocké par un nouveau démarrage arbitaire des mouvements de balayage via un nouvel actionnement du commutateur ou que le fonctionnement intermittent de l'essuie-glace est interrompu ou encore que l'alimentation en courant du montage de commande est coupée, le commutateur étant actionné de la même manière autant pour prolonger que pour raccourcir le temps de pause, de telle sorte que simultanément un mouvement de balayage individuel soit amorcé, le commutateur soit commandé à nouveau après un temps de pause choisi arbitrairement et ce temps de pause soit mesuré et stocké, le procédé étant caractérisé en ce que le réglage du temps de pause à l'aide d'un sélecteur disponible par ailleurs, qui peut prendre au moins les positions de commutation "Commande de balayage ARRET" et "Commande de balayage intermittent MARCHE", si le sélecteur est transposé, pour allonger ou raccourcir le temps de pause, dans la position de commutation "Commande de balayage ARRET" et, selon le temps de pause souhaité, dans la position de commutation "Commande de balayage intermittent MARCHE", deux mouvements de balayage étant déclenchés arbitrairement par déconnexion et reconnexion.

2. Procédé selon la revendication 1, caractérisé en ce que l'on stocke la valeur du temps de pause stockée en dernier lieu même dans le cas d'une coupure de la commande intermittente jusqu'à ce que l'alimentation en courant du montage de commande soit arrêtée.

3. Procédé selon la revendication 1 ou 2, caractérisé en ce que la commande de balayage intermittent, lors du premier passage du sélecteur dans sa position de commutation "Commande intermittente MARCHE", commence par un temps de pause prédéterminé fixe.

4. Procédé selon quelconque des revendications précédentes, caractérisé en ce que les temps de pause, qui sont plus courts qu'un mouvement de balayage individuel, ne sont pas stockés.

5. Procédé selon l'une quelconque des revendications précédentes, caractérisé en ce que, par commande d'un commutateur qui est en position de commutation "Mouvement de balayage anticipé MARCHE", le temps de pause courant est raccourci sans modification du temps de pause stocké de telle sorte qu'il se produise un mouvement de balayage anticipé qui permette au temps de pause stocké de recommencer à courir.

6. Procédé selon l'une quelconque des revendications précédentes, caractérisé en ce que, en présence d'une installation d'essuie-glace dont la fonction balayage-lavage peut-être démarrée en raccourcissant le temps de pause courant sans modifier le temps de pause stocké et avec le dernier mouvement de balayage faisant partie de la fonction de balayage-lavage, le temps de pause stocké recommence à courir.

7. Commutateur intermittent pour essuie-glace entraîné par un moteur électrique dans des véhicules automobiles, comprenant un relais encapsulé dans un boîtier pour la commande de l'essuie-glace et un montage de commande pour actionner l'essuie-glace, en particulier permettant de réaliser le procédé selon la revendication 1, caractérisé en ce que le montage de commande est agencé dans le boîtier du relais.

8. Commutateur intermittent pour essuie-glace entraîné par un moteur électrique dans des véhicules automobiles, en particulier permettant de réaliser le procédé selon la revendication 1, comprenant un bloc de connexion (1) par lequel le montage de commande est alimenté en courant, une mémoire programmable (3) pour le temps de pause, un compteur (7) pour déterminer le temps de pause, dans lequel compteur le contenu de la mémoire (3) est transféré, un générateur d'impulsions de synchronisation (2), dont les impulsions sont acheminées à l'entrée du compteur (7), un sélecteur (5) pour choisir le type de commande de l'essuie-glace et des portes (12 à 17 et 42), à travers lesquelles des parties de commutation du montage de commande sont liées de maniège logique les unes au autres, caractérisé en ce que le compteur (7) est un compteur qui peut compter au choix normalement ou à rebours et dans lequel, dans le cas d'un fonctionnement à rebours, le contenu de la mémoire (3) est transféré sous la forme d'un état de départ du compteur Zₐ, et en ce qu'il est prévu un décodeur (8) pour reconnaître l'état le plus bas du compteur (Z₀ = 0), un décodeur (10) pour reconnaître l'état le plus haut possible du compteur (Zₘₐₓ) et une mémoire (11) qui lui est raccordée à la sortie et dont le contenu indique si, lors de la dernière opération de comptage normal, I'état du compteur le plus haut possible (Zₘₐₓ) a été atteint, un décodeur (9) pour reconnaître les états des compteurs Z_{c}, qui sont inférieurs à Zₘₐₓ et supérieurs à un état du compteur prédéterminé Zₚ〉Z₀, et un générateur d'impulsions (6) qui, à chaque commande du sélecteur (5), lance une impulsion.

9. Commutateur intermittent selon la revendication 8, caractérisé en ce que l'entrée des données de la mémoire (3) pour le temps de pause est raccordée via un inverseur commutable (4) soit à la sortie du compteur (7), soit à une mémoire morte qui contient la valeur Zₛ d'un temps de pause fixe prédéterminé.

10. Commutateur intermittent selon la revendication 9, caractérisé en ce que l'inverseur (4) est commandé par le bloc de connexion (1).

11. Commutateur intermittent selon l'une quelconque des revendications 8 à 10, caractérisé en ce que le compteur (7) travaille normalement lorsque le commutateur ARRET/MARCHE (5) se trouve en position ARRET et en ce que le compteur (7) travaille autrement à rebours.

12. Commutateur intermittent selon l'une quelconque des revendications 8 à 11, caractérisé en ce que la sortie de la mémoire (11) pour l'état maximum du compteur (Zₘₐₓ) est liée avec l'entrée de la mémoire (3) pour le temps de pause de manière que le temps de pause stocké en dernier lieu reste conservé dans la mémoire (3) lorsque le compteur (7) déborde après une déconnexion de la commande intermittente (I = O).

13. Commutateur intermittent selon la revendication 12, caractérisé en ce qu'un capteur (50) est prévu, qui envoie un premier signal (Wpp = 0) lorsque l'essuie-glace se trouve en position de repos et envoie un autre signal (Wpp = 1) lorsque l'essuie-glace se trouve en dehors de sa position de repos dans la position de balayage, et en ce que la sortie de ce capteur (50) et la sortie du sélecteur (5) sont liées via une porte NON-ET (51) avec la mémoire (11) de l'état maximum du compteur (Zₘₐₓ) de telle manière que, lorsque le sélecteur (5) se trouve dans la position "Commande permanente MARCHE" (I = 0) et que l'essuie-glace se trouve en dehors de sa position de repos dans le champ de balayage (Wpp = 1), la mémoire (11) soit chargée de la valeur (max = 1) avec laquelle elle est habituellement chargée via le décodeur (10) lorsque l'état maximum du compteur (Zₘₐₓ) est atteint.

14. Commutateur intermittent selon la revendication 13, caractérisé en ce qu'un compteur de marche à vide (54) est prévu, qui est réglé par le capteur (50) et le commutateur de commande (56) d'une installation d'essuie-glace à une valeur de comptage prédéterminée Nw, en ce que le compteur de marche à vide (54) compte avec les signaux Wpp provenant du capteur (50) de la valeur Nw vers l'arrière jusqu'à 0 ou de 0 vers l'avant jusqu'à Nw aussitôt que la commande du commutateur (56) se termine et libère pendant la durée de cette opération de comptage un signal (QW = 1) qui maintient en marche le moteur de l'essuie-glace.

15. Commutateur intermittent selon l'une quelconque des revendications 8 à 14, comprenant un relais encapsulé dans un boîtier pour la commande de l'essuie-glace, caractérisé en ce que le montage de commande est agencé dans le boitier (61) entourant le relais (60).
